# EUROPEAN PATENT APPLICATION

(11) **EP 1 392 061 A2**
(43) Date of publication of application: **25.02.2004**
(21) Application number: 03425501.8
(22) Date of filing: 25.07.2003
(51) Int. Cl.: H04N 7/16, H04N 7/173

(54) **Apparatus for displaying images on a screen**

(30) Priority: 07.08.2002 IT fi20020147
(71) Applicant: Karczewska, Marzena, 55049 Viareggio, Lucca (IT)
(72) Inventor: Karczewska, Marzena, 55049 Viareggio, Lucca (IT)
(74) Representative: Martini, Lazzaro

(57) **Abstract**

The invention relates to an apparatus for displaying images on a screen, in particular for displaying images relevant to advertisements, commercials, marks, slogans and information on a television screen; the apparatus comprises: means (5) for connecting to a television set (6); means (3) for storing data and/or programs relevant to advertisements, commercials, marks, slogans and information; means (7; 70) for connecting to a telematic network (10); means (2) for data processing, connected to said means (5) for connecting to a television set, to said means (3) for storing data and/or programs and to said means (7; 70) for connecting to a telematic network (10) and able to control the apparatus (1), in order to send to said television set (6) signals relevant to advertisements, commercials, marks, slogans and information according to a preset program and/or to a signal received by said telematic network (10).

## Description

The present invention relates to an apparatus for displaying images on a screen, in particular for displaying images relevant to advertisements, commercials, marks, slogans and information on a television screen.

In the usual television programming, there are some interruptions during which are sent commercial advertisements and the like.
A drawback of the current system of television transmission is that the users, in correspondence of the interruptions for the advertisements, are obliged to see the advertisements sent by the broadcasting or to change channel.

There are drawbacks also for the advertisers with the current way of transmission of advertising communications in television. In fact, for transmitting advertisements by television, it is necessary to turn to a television broadcasting and to agree on the programming of the transmission of the advertisements coupling them to the transmissions foreseen by the programming of the broadcasting. Everybody has commercial agreements with the TV broadcasting is obliged to a diffusion of own advertisements linked to the area covered by the broadcasting and to the degree of preference accorded by the viewers to the same broadcasting, particularly in the agreed period of transmission of the advertisements. At the present, it is substantially impossible to address the advertising messages without being influenced by the characteristics of diffusion of the utilized broadcasting.

Furthermore, utilizing the current methodology of survey of the rating, it isn't possible to control with precision the rating of the commercial advertisements, since the relevant data can be different from the data of the correspondent program - for the possibility of temporary change of channel-and because the actual system of surveying is of statistic type (that is not absolute).

The main object of the present invention is to overcome the said drawbacks.

This result has been achieved, according to the invention, by adopting the idea of making an apparatus having the characteristics disclosed in claim 1. Further characteristics being set forth in the dependent claims.

Among the advantages of the present invention there are that for the user it is possible, on his request, to substitute the advertisements sent by a broadcasting with filmed sequences or other images transmitted by the apparatus, receiving in exchange credits or prizes of various type; that it is possible for the advertisers to know with precision the effective area interested by the advertising campaign; that it is possible to survey with precision the rating of a program or an advertisement, correlating these data to other data relevant, for instance, to the change of volume, that indicate the relevant popularity rating; that it is possible to receive information of various type on the television set; that it is possible to release the vision of the advertisements from the programming of the broadcastings; that the object of the invention has characteristics of great simplicity of construction and costs relatively low in respect to the possibility of utilization.

These and other advantages and characteristics of the invention will be best understood by anyone skilled in the art from a reading of the following description in conjunction with the attached drawings given as a practical exemplification of the invention, but not to be considered in a limitative sense, wherein:

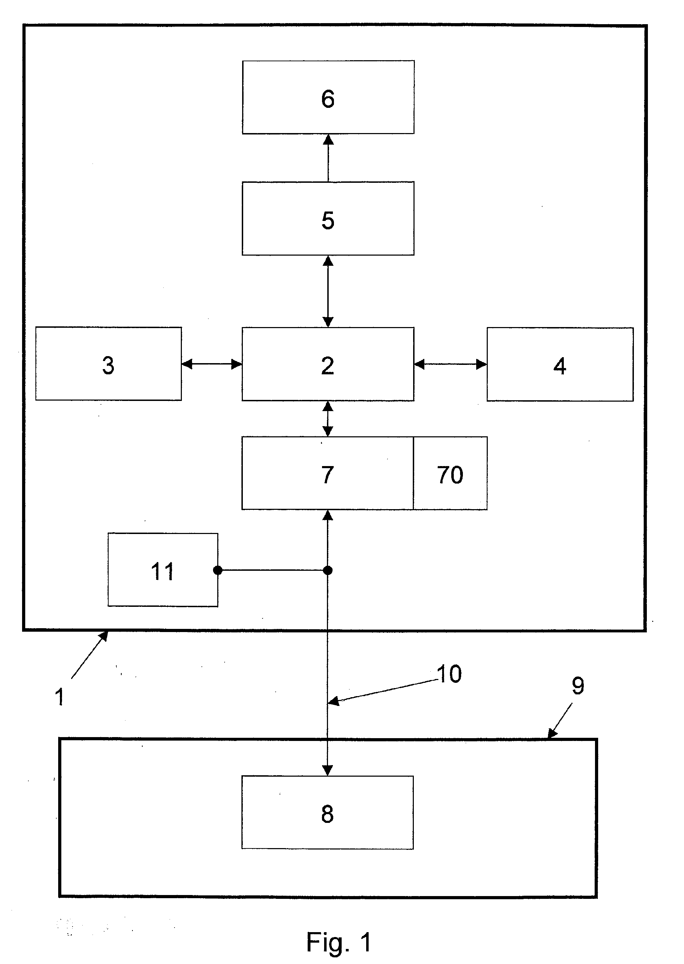

- Fig. 1 is relevant to a block diagram of a possible embodiment of the present invention.

Referring to the figures of the attached drawings, an apparatus (1) according to the present invention is usable for displaying images on a screen, in particular for displaying images relevant to advertisements, commercials, marks, slogans and information on a television screen.

The apparatus, generally speaking, comprises: means (5) for connecting to a television set (6); means (3) for storing data and/or programs relevant to advertisements, commercials, marks, slogans and information; means (7; 70) for connecting to a telematic network (10); means (2) for data processing, connected to said means (5) for connecting to a television set, to said means (3) for storing data and/or programs and to said means (7; 70) for connecting to a telematic network (10) and able to control the apparatus (1), in order to send to said television set (6) signals relevant to advertisements, commercials, marks, slogans and information according to a preset program and/or to a signal received by said telematic network (10).

Particularly, the means (2) for data processing con be constituted of a integrated circuit of control or controller, provided with a permanent memory defining said means for storing (3).
The permanent memory (3) can be constituted of a hard disk, in which are stored filmed sequences in AVI format (or in other formats) relating to the advertisements and the like, that can be substituted or modified also with remote control by a connection between the apparatus (1) and a remote control center or Host (9), provided with a relevant browser (8). The connection by telematic network (10) can be of GPRS type, ADSL type, by analogic telephonic line, etc..

The controller is operable by a relevant remote-control usable by the users for interacting with the apparatus.
The connection between the controller (2) and the television set (6) can be defined by a tuner (5). The controller (2), by the tuner (5), receives data which allows to know the channel or the broadcasting displayed. Furthermore, the tuner (5) allows to send signals to the TV set (6) utilising the frequency displayed at the moment.

The apparatus (1) can be distinct from the TV set (6) and connected to the same by a cable (e.g. of SCART type) or can be integrated into a television set, expressly realized.
The TV set (6), to which the apparatus (1) is connected, maintains without modification all its functions (tele-text, pip, etc.) and to the television set can be normally connected other video sources (DVD, video-recorders, photo-cameras, etc.), since the apparatus (1) is, in practice, crossable by the relevant signals without influences by them.

The connection to the telematic network (10) can comprise a telephonic section GSM (70) which allows the user to receive messages of SMS type which are displayed on the screen of his TV set (6), also with a previous notice by light signal.
The telematic network (10) can be realized by a wire network, modem, or GSM type, GPRS type, UMTS type, etc..

When the apparatus (1) is used, according to an agreement between the user and the provider of the apparatus, the provider, from remote, will operate on the TV set equipped by the apparatus (1) and, on the basis of a preset programming agreed with the user, can be change the programs displayed on the television set (in particular in correspondence of the advertisements sent on the channel tuned in this moment) with one or more filmed sequences stored in the hard disk (3). In consequence of a further command by the provider (host 9) (or by the user if he changes channel of the TV set), the apparatus (1) will interrupt the display of the filmed sequence and the screen of the TV set will display the program sent by the broadcasting on the channel on which was tuned the TV set, or it will display a new program in case of change of channel by the user.

In practice, every time a broadcasting send advertisements on its frequency or channel, the remote control center (host) (9) will send by the network (10) a signal to the apparatus (1) able to display advertisements and the like stored in the permanent memory (3), only by the TV sets that at the moment are tuned to such a frequency or channel. In practice, by the tune section (5), the apparatus (1) will display the filmed sequences stored in the memory (3) only on the screens of the TV sets tuned to the specific frequencies on which are sent the advertisements.

The apparatus (1) has also a function of a central of survey data of highest precision. In fact, by the network (10) it can be transmit continuously to the host (9) all data concerning in real time the utilize of the TV set by the user. For example, it is possible to know when the TV set is turned on and the total period of use in a day; it is possible to obtain information about the channels utilized and about the relevant time of vision; furthermore, this information can be given for single area or for all the areas. It is possible to obtain information about the popularity rating of the program, about the advertisements been displayed on TV sets turned on, about the areas in which the advertisements are displayed, and when the volume has been turned up or down, and so on. In practice, it is possible to obtain a certain verification for the advertising clients who want to present their products by the filmed sequences storable in the hard disk and, at the same time, it is obtained an information system about the use of the TV set and about the popularity rating of the programs provided with absolute precision and reliability, unobtainable with the current systems.
Obviously, the surveys will be executed with the authorization of the user, who can be suspend the service, simply turning off the apparatus.

Another use of the apparatus is relevant to the possibility for the user to send data to the host (9) by the remote-control (4). The user can participate, in real time, in games or poll without utilizing the telephone; for him, it will be sufficient to follow the instructions of the game or the poll , pressing the relevant buttons of his remote-control, by the telematic connection.

In the apparatus (1), in particular in the section of the storage means (3), there is a system of survey of the filmed sequences been displayed on the TV set of the user and of the relevant data (as, i.e. time of displaying, level of volume of TV set, etc.) and a software that stores the number of advertising sequences daily displayed by the TV set of the user, providing statistics relevant to the displaying of the filmed sequences. Utilizing the calculation of the sequences been displayed, it is possible to give a credit for the user, utilizable, e.g. in the form of credits on telephonic cards.

As described above, it is important that, in order to don't disturb the vision of the programs by the user, the advertisements can be displayed on the screen of the TV set only when on the tuned channel are displayed the advertisements by the broadcasting of said channel; in other words, the host (9) can put the apparatus (1) into operation for displaying the advertisements stored in the memory of the apparatus only when the broadcasting send the advertisements on the channel temporary tuned by the TV set. The advertisements of the apparatus (1) can be interrupted when the tuned channel stops the transmission of the advertisements of the broadcasting and resumes the normal programming.

Furthermore, the apparatus (1) is provided with a disabling button (11), by which the user can prevent the access to the TV set by the host and the surveying of any data relevant to his TV set. This button is schematically represented by the block (11) in Fig.1.

The use of a Web Server as means (7) for connecting to the telematic network (10) allows, advantageously, to utilize the technology of communication Web (TCP/IP and http protocols) between the host (9) and the apparatus (1), in order to make the apparatus independent from the physical transmission means and in order to allow different transmission forms according to the possibilities or the requirements; this characteristic simplifies the operations of configuration of the host (9) that can operate by an user interface given directly by the apparatus (1).

## Claims

1. Apparatus for displaying images on a screen, in particular for displaying images relevant to advertisements, commercials, marks, slogans and information on a television screen **characterized in that** it comprises:
- means (5) for connecting to a television set (6);
- means (3) for storing data and/or programs relevant to advertisements, commercials, marks, slogans and information;
- means (7; 70) for connecting to a telematic network (10);
- means (2) for data processing, connected to said means (5) for connecting to a television set, to said means (3) for storing data and/or programs and to said means (7; 70) for connecting to a telematic network (10) and able to control the apparatus (1), in order to send to said television set (6) signals relevant to advertisements, commercials, marks, slogans and information according to a preset program and/or to a signal received by said telematic network (10).

2. Apparatus according to claim 1, **characterized in that** said means for connecting to a television set comprises a tuner (5).

3. Apparatus according to claim 1, **characterized in that** said means (3) for storing data and/or programs comprises a hard disk.

4. Apparatus according to claim 1, **characterized in that** said means (3) for storing data and/or programs comprises means for detecting filmed sequences been displayed by the television set of an user, relevant to advertisements, commercials, marks, slogans and information, and relevant data.

5. Apparatus according to claim 1, **characterized in that** said means for connecting to the telematic network (10) are of wire network type.

6. Apparatus according to claim 1, **characterized in that** said means for connecting to the telematic network (10) are of wireless type.

7. Apparatus according to claim 1, **characterized in that** said means for connecting to the telematic network (10) are of GSM (70) type with reception of signals of SMS type.

8. Apparatus according to claim 1, **characterized in that** it is provided with a disabling button (11).

9. Apparatus according to claim 1, **characterized in that** said means (3) for storing data and/or programs is able to store digital images and filmed sequences.

10. Apparatus according to one of preceding claims, **characterized in that** the apparatus (1) is permanently located in a television set.
